# EUROPEAN PATENT APPLICATION

(11) **EP 4 169 384 A1**
(43) Date of publication of application: **26.04.2023**
(21) Application number: 22382969.8
(22) Date of filing: 12.10.2022
(51) Int. Cl.: A21C 1/14, B01F 27/07, B01F 27/2121, F16D 1/08, F16B 2/06

(54) **ATTACHMENT FOR DOUGH MIXERS**

(30) Priority: 20.10.2021 ES 202132052 U
(71) Applicant: López López, Miguel, 37188 Carbajosa de la Sagrada (ES); López López, Susana, 37188 Carbajosa de la Sagrada (ES); Gómez Gómez, María José, 37188 Carbajosa de la Sagrada (ES); Arribas Aleixios, Vicente Andrés, 37188 Carbajosa de la Sagrada (ES)
(72) Inventor: López López, Miguel, 37188 Carbajosa de la Sagrada (ES); López López, Susana, 37188 Carbajosa de la Sagrada (ES); Gómez Gómez, María José, 37188 Carbajosa de la Sagrada (ES); Arribas Aleixios, Vicente Andrés, 37188 Carbajosa de la Sagrada (ES)
(74) Representative: García Limorti, Elena

(57) **Abstract**

This invention, an attachment for dough mixers, which allows for the quick and simple disassembly of the kneading tool, without having to disassemble a large part of the machine, comprising one or several arms (1) which are part of the kneading machine at whose end the tool (2) is coupled and fastened by means of a stop (3) which is configured to lock the tool (2) onto the arm (1) by means of numerous fasteners (4). At least one guide (5) is configured to prevent the tool (2) from slipping and moving from its working position during operation.

## Description

### PURPOSE OF THE INVENTION

The purpose of this invention, as its name suggests, is to serve as an attachment for dough mixers which enables the kneading tool to be removed in a quick and simple manner, without having to disassemble a large portion of the machine. This is an innovation that, among the current technology, provides advantages unknown until now.

### TECHNOLOGY SECTOR

This invention belongs to the food industry sector, more specifically to the bakery industry.

This invention is an attachment for dough mixers, which allows the kneading tool to be changed quickly.

### INVENTION BACKGROUND

As a reference to the current state of the art, it should be noted that, although a great variety and many models of dough mixers are known, the kneading tools or blades of these machines are inserted into the arm longitudinally and are held by a clamping device. This causes the changing of these tools to be a tedious and complicated process for users since practically the entire arm has to be disassembled, and the whole process keeps the machine inoperative for a considerable amount of time. To the applicant's knowledge, there does not exist any other invention with structural and constitutive technical characteristics equal or similar to those of the one claimed here.

### EXPLANATION OF THE INVENTION

This invention is thus an attachment for dough mixers comprising a stop which is complementary to the shape of the end of the arm where the tool is installed and numerous fasteners which allow for the disassembly and extraction of tools in a quick way without having to disassemble large parts of the machine.

In addition, at least one guide ensures that the tool does not move or shift out of its working position during operation.

### BRIEF DESCRIPTION OF THE DRAWINGS

In order to complete the description being made and with the purpose of helping to better understand the characteristics of the invention, figures of an illustrative and nonlimiting nature, which are integral to this description, are included. The following has been depicted:

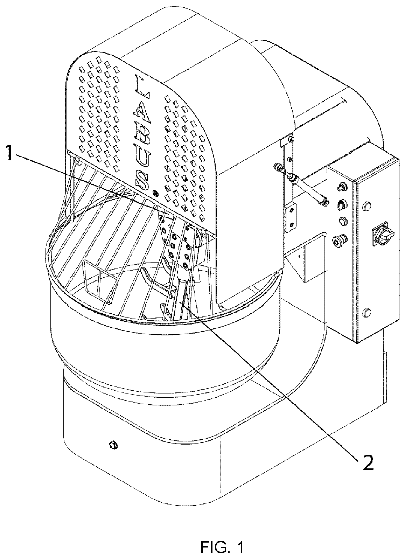

Figure 1 is a perspective drawing of a dough mixer.

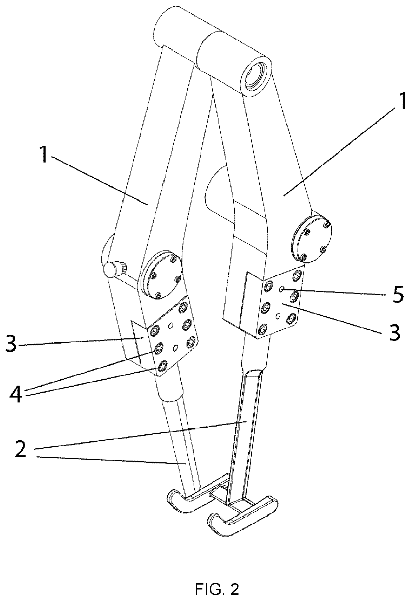

Figure 2 is a perspective drawing of both the arms (1) and tools (2) showing the attachment for dough mixers.

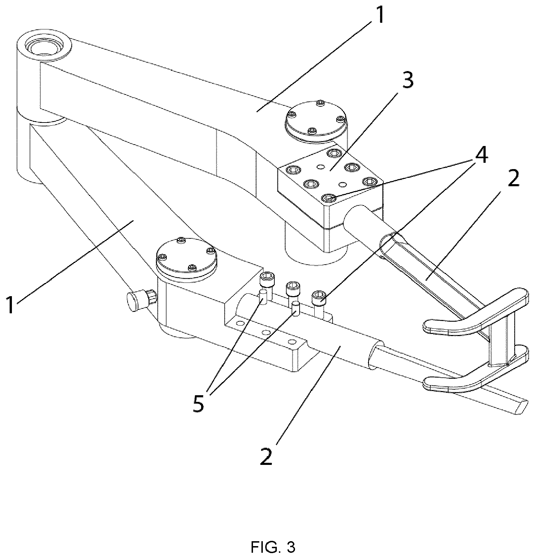

Figure 3 is a perspective drawing of the arms (1) and the tools (2) where the attachment for dough mixers is shown, and one of the stops (3) is hidden.

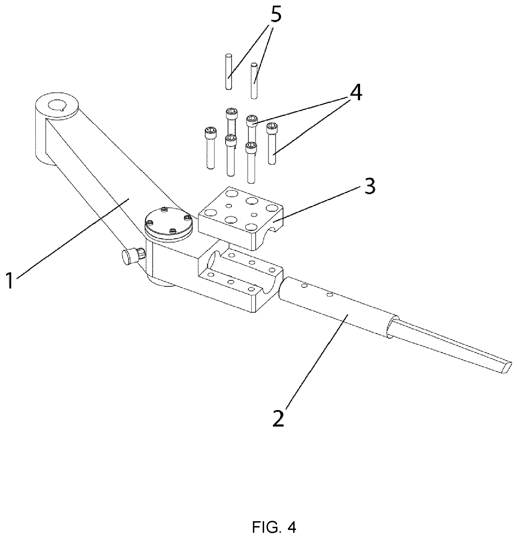

Figure 4 is a perspective drawing of an exploded view of the arms (1) and tools (2) showing the attachment for dough mixers.

### PREFERRED EMBODIMENT OF THE INVENTION

In view of the figures, a preferred, but not limiting, embodiment of the proposed invention, which consists of an attachment for dough mixers, is described below. As can be seen in the figures, the attachment for dough mixers comprises one or more arms (1) which are part of the dough mixer at the end of which the tool (2) is coupled and fastened by a stop (3) which is configured to lock the tool (2) on the arm (1) by means of a numerous fasteners (4). At least one guide (5) is configured to prevent the tool (2) from slipping and being able to move from its working position during operation.

## Claims

1. Attachment for dough mixers that comprises one or more arms (1) which are part of the mixer and at the end of which the tool (2) is coupled and fastened by means of a stop (3) which is configured to lock the tool (2) onto the arm (1) by means of numerous fasteners (4).

2. Attachment for dough mixers according to claim 1, **characterised by** at least one guide (5) that is configured to prevent the tool (2) from slipping and moving from its working position during operation.
